# EUROPÄISCHE PATENTSCHRIFT

(11) **EP 2 187 085 B1**
(45) Veröffentlichungstag und Bekanntmachung des Hinweises auf die Patenterteilung: **11.01.2017**
(21) Anmeldenummer: 09014154.0
(22) Anmeldetag: 12.11.2009
(51) Int. Cl.: B62K 25/04, F16F 9/46, B62K 25/08

(54) **Federgabel für ein Fahrrad**
Suspension fork for a bicycle
Fourche à ressort pour un vélo

(30) Priorität: 13.11.2008 DE 102008057268
(43) Veröffentlichungstag der Anmeldung: 19.05.2010
(73) Patentinhaber: DT Swiss AG, 2500 Biel/ Bienne 6 (CH)
(72) Erfinder: Achenbach, Martin, 2503 Biel (CH); Müller, Christian, 3638 Blumenstein (CH)
(74) Vertreter: BSB Intellectual Property Law

(56) Entgegenhaltungen:
- WO-A1-01/15964
- WO-A1-2008/079093
- DE-U1-202006 003 075
- GB-A- 2 415 027
- US-A- 4 972 928
- US-A1- 2005 104 320
- US-A1- 2009 115 159
- US-B1- 6 217 049

## Beschreibung

Die vorliegende Erfindung betrifft eine Federgabel für ein Fahrrad, sowie ein Dämpfungssystem für ein Standrohr einer Federgabel eines Fahrrads.

Der Einsatz von Federgabeln an Fahrrädern ist grundsätzlich schon lange Zeit bekannt. Insbesondere als Teleskop-Federgabeln ausgeführte Federgabeln werden an Downhill- und Mountainbikes, sowie an Crosscountry-Fahrrädern und zunehmend auch an Alltagsfahrrädern verbaut.

Federgabeln weisen meist zwei mit Bezug zum Rahmen des Fahrrads feststehende Rohre, die sogenannten Standrohre und zwei untere bewegliche Rohre auf, an denen die Nabe des Laufrades befestigt ist. Die Standrohre werden durch eine Gabelbrücke oder Gabelkrone zusammengehalten, an denen mittig das Gabelschaftrohr befestigt ist. Die unteren beweglichen Rohre sind die sogenannten Tauchrohre bzw. Gleitrohre.

Die Fahrer von mit Federgabeln ausgerüsteten Fahrrädern wünschen eine leichte und schnelle Einstellbarkeit der Feder- und Dämpfungseigenschaften der Federgabeln, um die aktuelle Charakteristik der Federgabel schnell an die jeweiligen Umgebungsbedingungen anpassen zu können.

Beispielsweise offenbart die US 6 217 049 B1 eine Federgabel gemäß des Oberbegriffs des Anspruchs 1.

In manchen Situationen wünschen die Fahrer von Mountainbikes beispielsweise ein Abschalten der Feder- und Dämpfungseigenschaften oder ein Einfedern der Federgabel, um an starken Steigungen den Neigungswinkel des Fahrrads zu verringern, und um damit sicherere Fahreigenschaften und eine angenehmere Position auf dem Fahrrad zu ermöglichen.

Ein zunehmendes Einfedern der Federgabel wird über das Aktivieren eines Sperrventils erreicht, mit der der Fluidweg in der Zugstufe versperrt wird, sodass nur noch in der Druckstufe ein Fluss des Dämpfungsfluids möglich ist, wodurch die Federgabel bei den nachfolgenden Dämpfungsbewegungen weiter einfedert, aber nicht mehr ausfedern kann, bis die Federgabel vollständig eingefedert ist.

Nachteilig an solchen Systemen ist, dass das vollständige Einfedern einer Federgabel in manchen Situationen nicht gewünscht ist, da sich die Gesamtgeometrie des Fahrrads in diesem Fall zu ungünstig verändert. So ändern sich Nachlauf und Lenkungswinkel zum Ungünstigen hin.

Ausgehend vom beschriebenen Stand der Technik ist es deshalb die Aufgabe der vorliegenden Erfindung eine Federgabel und ein Dämpfungssystem für ein Standrohr einer Federgabel zur Verfügung zu stellen, womit ein flexibler und einfacher Betrieb möglich ist.

Diese Aufgabe wird mit einer Federgabel mit den Merkmalen des Anspruchs 1 gelöst. Bevorzugte Weiterbildungen sind Gegenstand der Unteransprüche. Weitere vorteilhafte Merkmale und Eigenschaften der Erfindung ergeben sich aus der Beschreibung des Ausführungsbeispiels.

Die erfindungsgemäße Federgabel für ein Fahrrad umfasst zwei Standrohre und zwei damit zusammenwirkende Tauchrohre und einen Radaufnahmeraum dazwischen, der dafür vorgesehen ist, ein Laufrad und insbesondere ein Vorderrad eines Fahrrads aufzunehmen. Weiterhin umfasst die Federgabel wenigstens ein Dämpfungssystem. Das Dämpfungssystem weist wenigstens ein Sperrventil zur Sperrung der Zugstufe und wenigstens ein Sperrventil zur Sperrung der Druckstufe auf. Weiterhin ist ein gemeinsames Einstellteil vorgesehen, wobei mit dem gemeinsamen Einstellteil die Sperrung der Zugstufe und die Sperrung der Druckstufe einstellbar bzw. aktivierbar ist.

Die erfindungsgemäße Federgabel hat viele Vorteile. Ein erheblicher Vorteil der erfindungsgemäßen Federgabel ist, dass sowohl ein Sperrventil für die Zugstufe als auch ein Sperrventil für die Druckstufe vorgesehen sind. Durch ein Aktivieren des Sperrventils für die Zugstufe und durch ein gleichzeitiges Aktivieren des Sperrventils für die Druckstufe wird eine nahezu starre Federgabel zur Verfügung gestellt, bei der weder ein Einfedern noch ein Ausfedern möglich ist. Besonders vorteilhaft ist das gemeinsame Einstellteil, mit dem sowohl des Sperrventil für die Zugstufe als auch das Sperrventil für die Druckstufe einstellbar sind. So kann durch ein gemeinsames Einstellteil mit einer Bewegung die Aktivierung bzw. Deaktivierung beider Sperrventile erfolgen.

Ein gemeinsames Einstellteil an der Federgabel bietet erhebliche Vorteile auch in Hinsicht auf die Zuverlässigkeit und einen einfachen Aufbau. Wenn beispielsweise mehrere separate Justageelemente an der Federgabel vorgesehen und über Bowdenzüge ferngesteuert werden würden, könnten diese mehreren Elemente eventuell auch durch ein gemeinsames Bedienteil am Lenker betätigt werden. Nachteilig an einer solchen Realisierung ist aber, dass die Montage der Bowdenzüge aufwändig ist, und dass außerdem auch die Gefahr von Fehlerquellen zunimmt. Weiterhin müssen solche Seilzüge regelmäßig gewartet und gegebenenfalls geschmiert werden. Ein erfindungsgemäßes gemeinsames Einstellteil an der Federgabel, welches auf die Sperrventile zur Sperrung der Druckstufe und der Zugstufe direkt einwirkt, ist demgegenüber zuverlässiger, einfacher zu bedienen und weniger aufwändig zu montieren.

Mit der erfindungsgemäßen Federgabel werden eine besonders einfache Bedienung und ein flexibler Einsatz ermöglicht. Durch die Bedienung des gemeinsamen Einstellteils können alle Lockout- bzw. Sperrfunktionen eingestellt werden. Damit ist es möglich, die Federgabel in jeder beliebigen Einfeder- bzw. Ausfederposition zu fixieren und dort festzustellen, sodass von dort kein weiterer Einfeder- oder Ausfedervorgang möglich ist. So kann der Benutzer während der Fahrt beide Sperrventile betätigen und somit den Durchfluss des Dämpfungsmediums in Richtung der Zugstufe und in Richtung der Druckstufe unterbinden, sodass die Federgabel in der aktuellen Position verbleibt.

Da der Fahrer während der Fahrt das gemeinsame Bedienteil bzw. Einstellteil bedienen kann, kann der Fahrer somit grundsätzlich in jeder beliebigen Einfederposition der Federgabel diese fixieren. Das ermöglicht dem Fahrer bei einer steilen Bergauffahrt die Federgabel in der gewünschten Einfederposition zu fixieren, indem der Fahrer beim Bergauffahren zunächst das Zugstufen-Lockout bzw. die Zugstufensperrung aktiviert und bei der gewünschten Einfedertiefe das Druckstufen-Lockout bzw. die Druckstufensperrung.

Ein Sperrventil zur Sperrung der Druckstufe oder der Zugstufe wird auch Lockout-Ventil genannt und dient zur Aktivierung eines Lockouts bzw. zu Sperrung der Druckstufe oder der Zugstufe, worin der Durchfluss durch das entsprechende Ventil unterbunden wird.

Insbesondere ist das gemeinsame Einstellteil in einem oberen Bereich der Federgabel und insbesondere in einem oberen Bereich des Standrohrs bzw. der Standrohre vorgesehen. Besonders bevorzugt ist das gemeinsame Einstellteil an einem oberen Bereich des Dämpfungssystems angeordnet und vorzugsweise damit fest verbunden.

Das Dämpfungssystem ist insbesondere in ein Standrohr integriert, wobei es auch möglich sein kann, dass das Dämpfungssystem zum Teil in beiden Standrohren angeordnet ist oder sich zum Teil in dem Verbindungsteil befindet, welches die beiden Standrohre verbindet, sofern zwei Standrohre vorgesehen sind. Das Verbindungsteil ist insbesondere als Gabelkrone ausgeführt, das an den beiden seitlichen Enden oder im Bereich der beiden seitlichen Enden die Standrohre aufnimmt, während in einem mittleren Bereich ein Gabelschaftrohr angeordnet ist. Es ist auch möglich, dass die Federgabel nur ein Standrohr aufweist, an dessen unterem Ende das Laufrad angeordnet ist.

In einer bevorzugten Weiterbildung weist das Dämpfungssystem wenigstens einen beweglichen Kolben auf, der eine Dämpfungskammer des Dämpfungssystems in eine erste Kammer und in eine zweite Kammer unterteilt. Oberhalb der Dämpfungskammer ist insbesondere ein Steuerabschnitt an dem Dämpfungssystem vorgesehen, wobei der Steuerabschnitt insbesondere an die erste Kammer der Dämpfungskammer angrenzt.

Das Dämpfungssystem ist insbesondere in ein Standrohr eingesetzt, wobei der Steuerabschnitt an einem oberen Ende des Standrohres vorgesehen ist und von dem oberen Ende zugänglich ist oder aus dem oberen Ende heraussteht. In dem anderen Standrohr kann das Federsystem der Federgabel vorgesehen sein. Möglich ist es auch, dass sowohl das Dämpfungssystem als auch das Federsystem in einem Standrohr vorgesehen sind.

Insbesondere sind in dem Steuerabschnitt die Drosselventile des Dämpfungssystems vorgesehen, sodass in dem oberen Steuerabschnitt die bei der Drosselung entstehende Wärme produziert wird, die dort einfach in die Umgebung abgegeben werden kann.

Das Einstellteil kann an einem Standrohr oder an dem Verbindungsteil angeordnet sein. Insbesondere ist das gemeinsame Einstellteil beweglich und insbesondere verschwenkbar vorgesehen.

Vorzugsweise kann das Einstellteil in eine Position bewegt werden, in der es das Sperrventil für die Zugstufe aktiviert und insbesondere verschließt und es kann in eine andere Position bewegt werden, in der das gemeinsame Einstellteil das Sperrventil für die Zugstufe aktiviert. Besonders bevorzugt kann das gemeinsame Einstellteil in eine weitere Position bewegt werden, in der das Sperrventil für die Zugstufe und das Sperrventil für die Druckstufe aktiviert werden. Unter aktivieren ist hier ein Verschließen oder ein im Wesentlichen verschließen des entsprechenden Ventils zu verstehen.

In allen Ausgestaltungen ist das Einstellteil insbesondere drehbeweglich vorgesehen und kann von einer ersten Drehposition oder Ruheposition, in der beide Sperrventile geöffnet sind, in unterschiedliche Drehpositionen bewegt werden.

Vorteilhafterweise wird in einer zweiten Drehposition das Sperrventil für die Zugstufe aktiviert. In einer dritten Drehposition werden vorteilhafterweise sowohl das Sperrventil für die Zugstufe und das Sperrventil für die Druckstufe aktiviert. In einer möglichen vierten Drehposition wird nur das Sperrventil für die Druckstufe aktiviert.

Vorzugsweise erfolgt bei der Drehbewegung des gemeinsamen Einstellteils zunächst eine Aktivierung des Sperrventils für die Zugstufe und anschließend die gemeinsame Aktivierung beider Sperrventile, sodass der Fahrer bei Erreichen einer gewünschten Einfederungsstellung das gemeinsame Bedienteil in die Drehposition bewegt, in der beide Sperrventile aktiviert bzw. geschlossen sind.

Vorteilhafterweise ist der bewegliche Kolben über eine Kolbenstange mit einem Tauchrohr insbesondere fest verbunden. Da bei dieser Ausgestaltung die Steuerungselemente an der Oberseite der Standrohre bzw. an der Gabelkrone vorgesehen sind und da vorzugsweise die Drosselelemente ebenfalls in einem oberen Bereich der Standrohre angeordnet sind, kann die Kolbenstange als einfaches Element ausgeführt werden, welches von der Dämpfungskammer aus nach unten in das Tauchrohr ragt und dort damit fest verbunden ist. Das ermöglicht einen besonders einfachen Aufbau und eine einfache Struktur der erfindungsgemäßen Federgabel.

Vorzugsweise werden zwei voneinander beabstandete Standrohre und wenigstens ein die beiden Standrohre oberhalb des Radaufnahmeraums verbindendes Verbindungsteil vorgesehen.

In allen Ausgestaltungen ist es bevorzugt, dass das Standrohr oder die Standrohre wenigstens teilweise aus einem Metall oder einer Metalllegierung bestehen, wobei das Tauchrohr oder die Tauchrohre ebenfalls aus Metall oder einer Metalllegierung bestehen können. Bevorzugt ist es auch, dass das wenigstens eine Tauchrohr wenigstens teilweise aus einem Faserverbundwerkstoff besteht, was eine hohe Festigkeit bei einem geringeren Gewicht ermöglicht.

Vorteilhafterweise ist an dem Steuerabschnitt wenigstens ein einstellbares Drosselventil zur Einstellung der Zugstufendämpfung und es ist wenigstens ein einstellbares Drosselventil zur Einstellung der Druckstufendämpfung vorgesehen. Durch den insbesondere in einem oberen Bereich angeordneten Steuerabschnitt wird eine einfache Bedienung der Federgabel ermöglicht und es wird ein unkomplizierter Aufbau ermöglicht, da die Steuerelemente zur Steuerung der Drosselventile in der Nähe der einstellbaren Drosselventile angeordnet werden können.

Insbesondere ist wenigstens eines der einstellbaren Drosselventile ein Low-Speed-Drosselventil, um im normalen Fahrbetrieb die Dämpfungseigenschaften der Federgabel einstellen zu können.

Bevorzugterweise ist wenigstens ein High-Speed-Drosselventil für die Zugstufendämpfung und/oder für die Druckstufendämpfung vorgesehen, welches insbesondere fest eingestellt ist. Ein solches High-Speed-Drosselventil dient insbesondere dazu, bei starken Schlägen oder dergleichen eine entsprechende Dämpfungswirkung zu erzeugen, während im normalen Fahrbetrieb das High-Speed-Drosselventil geschlossen ist und keine Wirkung zeigt.

Vorzugsweise ist die Dämpfungskammer als Innenkammer ausgebildet, die von einer Außenkammer wenigstens teilweise umgeben ist.

Die Dämpfungskammer ist vorzugsweise als Hochdruckkammer ausgebildet, während der Steuerabschnitt eine Niederdruckkammer oder Ausgleichskammer aufweist. Der Hochdruckbereich wird von dem Niederdruckbereich durch die Drosselventile abgegrenzt.

Vorzugsweise sind an dem Steuerabschnitt eine Steigleitung für die Druckstufe und eine Steigleitung für die Zugstufe vorgesehen, sodass sowohl in der Druckstufe als auch in der Zugstufe das insbesondere als Öl ausgeführte Dämpfungsfluid zu den Drosselventilen aufsteigt, von wo es nach Drosselung in die Niederdruckkammer geleitet wird.

Das erfindungsgemäße Dampfungssystem insbesondere für ein Standrohr einer Federgabel eines Fahrrads umfasst einen beweglichen Kolben, der eine Dämpfungskammer in eine erste und in eine zweite Kammer teilt. Weiterhin sind Drosselventile zur Einstellung der Zugstufendämpfung und zur Einstellung der Druckstufendämpfung vorgesehen. Das Dämpfungssystem ist dazu geeignet, in ein Standrohr einer Federgabel eingesetzt zu werden. Das Dämpfungssystem weist wenigstens ein Sperrventil zur Einstellung eines Lockouts in der Zugstufe und wenigstens ein Sperrventil zur Einstellung eines Lockouts in der Druckstufe auf. Weiterhin ist ein gemeinsames Einstellteil vorgesehen, mit welchem die Sperrung der Zugstufe bzw. das Lockout in der Zugstufe und die Sperrung der Druckstufe bzw. das Lockout in der Druckstufe aktivierbar ist.

Auch das erfindungsgemäße Dämpfungssystem hat viele Vorteile. Ein erheblicher Vorteil des erfindungsgemäßen Dämpfungssystems ist der flexible Einsatz. Mit dem erfindungsgemäßen Dämpfungssystem kann über die einfache Bedienung eines gemeinsamen Einstellteils sowohl die Zugstufe als auch das die Druckstufe gesperrt werden. Das ermöglicht eine beliebige Höhenjustage der Federgabel, womit die Federgabel in der gewünschten Einfederposition fixiert werden kann, da bei aktivierter Sperrung in der Druckstufe und bei aktivierter Sperrung in der Zugstufe im Prinzip keine Einfederbewegung oder Ausfederbewegung der Federgabel möglich ist.

Vorzugsweise ist das gemeinsame Einstellteil an einem Steuerabschnitt oberhalb der Dämpfungskammer vorgesehen, um einem Fahrer eines damit ausgerüsteten Fahrrads das Bedienen während der Fahrt zu ermöglichen. Dann muss der Fahrer zur Bedienung des gemeinsamen Einstellteils sich nur zu dem Einstellteil hinabbeugen, welches vorteilhafterweise in einem oberen Bereich der Standrohre der Federgabel angeordnet ist, um das gemeinsame Einstellteil zu bedienen und die gewünschte Stellung einzustellen. Das Einstellteil kann auch fernsteuerbar vorgesehen sein und über einen Seilzug oder ein Bowdenkabel oder eine elektrische Verbindung mit einem Einstellelement oder einem Einstellhebel am Lenker verbunden sein.

In allen Ausgestaltungen ist die Federgabel vorzugsweise als Right-Side-Up-Bauform ausgeführt, bei der die in der Gabelbrücke der Federgabel befestigten Standrohre in die Tauchrohre mit größerem Durchmesser eintauchen. Möglich ist auch der Einsatz an anderen Federgabeln nach einem anderen Bauprinzip.

In allen Ausgestaltungen und Weiterbildungen sind die Tauchrohre vorzugsweise zum gleitenden Kontakt mit den Standrohren der Federgabel vorgesehen. Vorzugsweise werden die Standrohre mittels Gleitlagern in den Tauchrohren gelagert.

Vorzugsweise ist an dem unteren Ende wenigstens eines Tauchrohrs ein Ausfallende angeordnet, welches insbesondere zur Aufnahme eines Laufrads vorgesehen ist.

Weitere Vorteile und Anwendungsmöglichkeiten der vorliegenden Erfindung ergeben sich aus der Beschreibung von Ausführungsbeispielen, die nun mit Bezug auf die beiliegenden Figuren erläutert werden.

In den Figuren zeigen:
- Fig. 1: eine Vorderansicht einer erfindungsgemäßen Federgabel;
- Fig. 2: eine geschnittene Seitenansicht gemäß A-A der Federgabel aus Fig. 1;
- Fig. 3: eine geschnittene vergrößerte Seitenansicht der Federgabel in der Druckstufe;
- Fig. 4: eine geschnittene Seitenansicht der Federgabel in der Zugstufe;
- Fig. 5: den Steuerabschnitt des Dämpfungssystems der Federgabel nach Fig. 3 in der Druckstufe in vergrößerter Darstellung;
- Fig. 6: den Steuerabschnitt des Dämpfungssystems der Federgabel nach Fig. 4 in der Zugstufe in vergrößerter Darstellung;
- Fig. 7: den Steuerabschnitt des Dämpfungssystems der Federgabel nach Fig. 1 mit dem Einstellhebel in der ersten Umschaltstufe;
- Fig. 8: den Steuerabschnitt des Dämpfungssystems der Federgabel nach Fig. 1 mit dem Einstellhebel in der zweiten Umschaltstufe;
- Fig. 9: einen vergrößerten Querschnitt durch ein Standrohr im oberen Bereich;
- Fig. 10: einen vergrößerten Querschnitt durch ein Standrohr im Bereich der Überströmöffnung;
- Fig. 11: die Federgabel nach Fig. 1 bei gesperrter Zugstufe beim Einfedern;
- Fig. 12: die Federgabel aus Fig. 1 bei gesperrter Zugstufe nach starker Einfederung;
- Fig. 13: die Federgabel aus Fig. 1 bei gesperrter Zugstufe und anschließendem langsamen Ausfedern;
- Fig. 14: eine vergrößerte Darstellung eines Querschnitts des Steuerabschnitts einer weiteren Federgabel;
- Fig. 15: einen weiteren Querschnitt durch den Steuerabschnitt der Federgabel nach Fig. 14; und

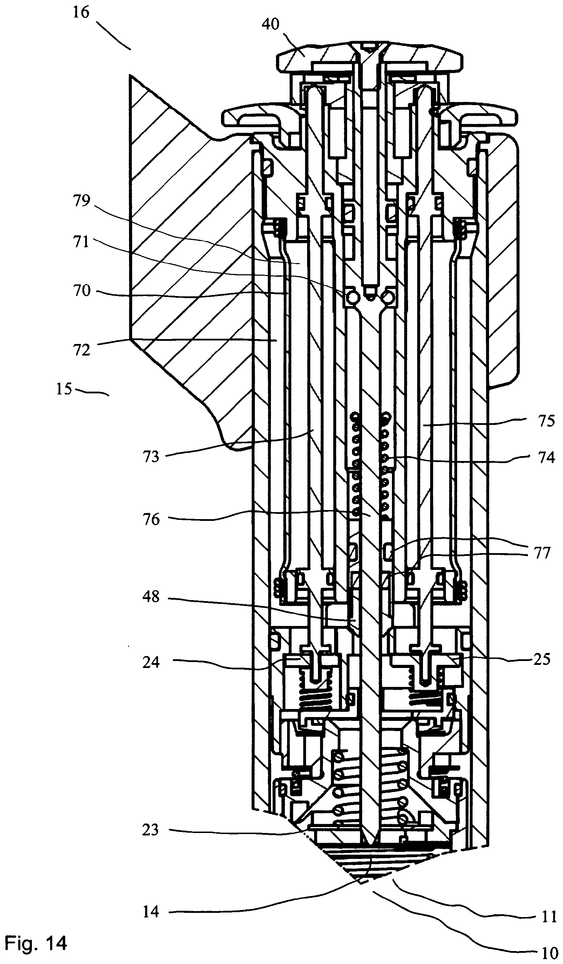

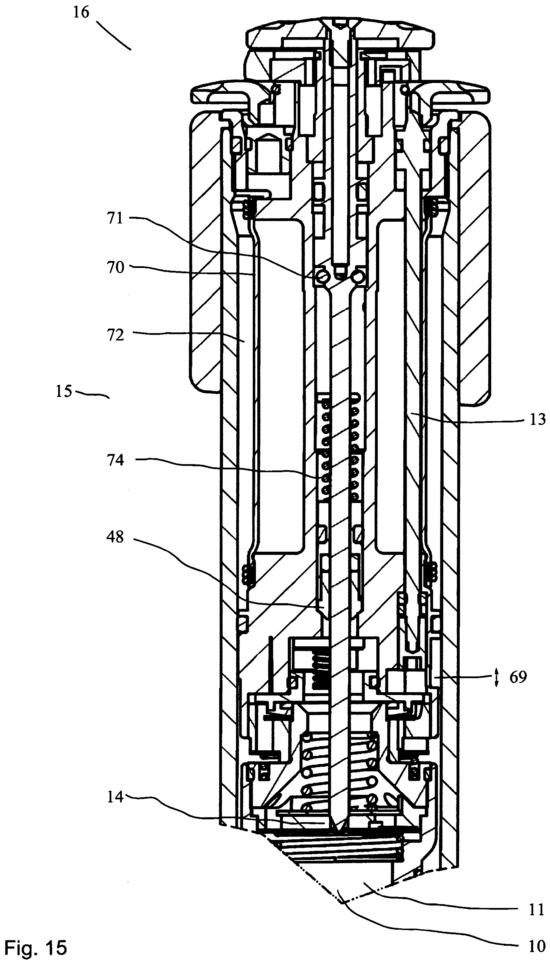

- Fig. 15: einen vergrößerten Querschnitt der Federgabel nach Fig. 14 mit dem beweglichen Kolben.

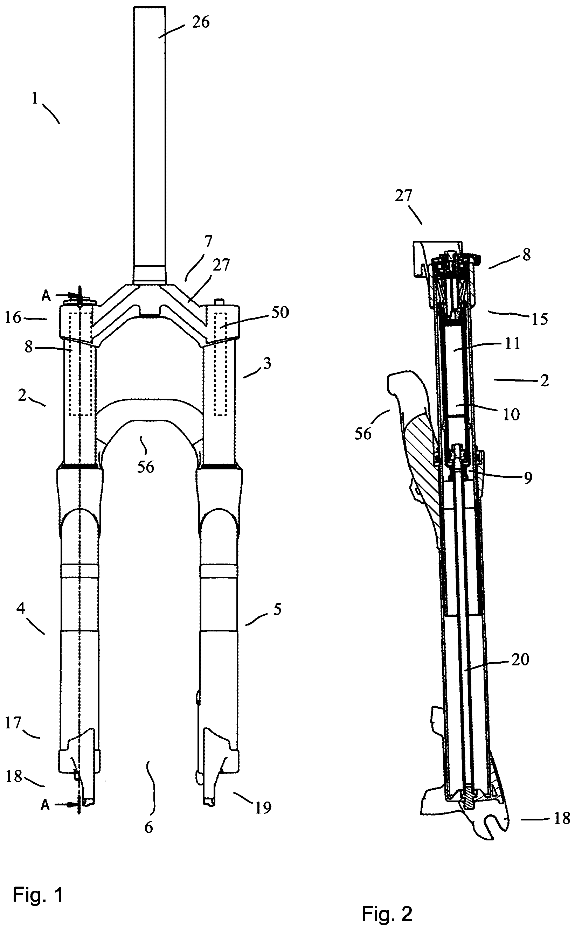

In den Fig. 1 bis 13 ist ein erstes Ausführungsbeispiel der erfindungsgemäßen Federgabel 1 in teilweise stark schematischen Ansichten dargestellt. Um die Übersichtlichkeit zu wahren und die Funktion besser erklären zu können, wurden einzelne Teile und Komponenten weggelassen.

Die in Fig. 1 in einer Vorderansicht dargestellte Federgabel 1 für ein hier nicht dargestelltes Fahrrad weist im oberen Bereich einen Gabelschaft 26 auf, der an ein als Gabelkrone 27 ausgeführtes Verbindungsteil 7 mittig angeschlossen ist, um die Gabel drehbeweglich an dem Rahmen des Fahrrads zu befestigen.

An den beiden Enden der Gabelkrone 27 sind Standrohre 2 und 3 an der Gabelkrone 27 befestigt. In dem Standrohr 2 ist ein Dämpfungssystem 8 angeordnet und in dem Standrohr 3 ist ein Federsystem 50 vorgesehen. Möglich ist es auch, in ein Standrohr 2 oder 3 das Dämpfungssystem 8 und auch das Federsystem 50 einzubauen. Mit dem Dämpfungssystem 8 und dem Federsystem 50 erhält die Federgabel 1 die gewünschten Feder- und Dämpfungseigenschaften.

Schiebbeweglich an den Standrohren 2 und 3 ist eine Tauchrohreinheit vorgesehen, die Tauchrohre 4 und 5 umfasst, die über wenigstens einen Verbindungsbügel 56 miteinander verbunden sind. Die Tauchrohreinheit kann aus mehreren Einzelteilen bestehen, kann aber auch einstückig gefertigt sein.

Zwischen den beiden Tauchrohren 4 und 5 bzw. zwischen den Standrohren 2 und 3 ist der Radaufnahmeraum 6 vorgesehen. Ein hier nicht dargestelltes Rad kann an den Ausfallenden 18 und 19 der Tauchrohre 4 und 5 am unteren Ende 17 der Federgabel 1 befestigt werden.

Am oberen Ende 16 ist in das Standrohr 2 ein Dämpfungssystem 8 integriert, wie insbesondere Fig. 2 entnommen werden kann.

Das Dämpfungssystem 8 umfasst eine Dämpfungskammer 10, die durch einen beweglichen Kolben 9 in eine obere erste Kammer 11 und eine untere zweite Kammer 12 geteilt wird. Oberhalb der Dämpfungskammer 10 ist ein Steuerabschnitt 15 vorgesehen, der gleichzeitig den oberen Abschluss der Dämpfungskammer 10 bildet. Der bewegliche Kolben 9 ist hier als geschlossener Pumpkolben ausgebildet. Ein Durchfluss durch den beweglichen Kolben 9 ist im Regelfall nicht möglich. Wenn der Kolben bewegt wird, muss von der oberen oder ersten Dämpferkammer 11 ein äußerer Rückfluss zur unteren oder zweiten Dämpferkammer 12 erfolgen.

Die Dämpfungskammer 10 mit der ersten Kammer 11 und der zweiten Kammer 12 ist als Hochdruckkammer 29 ausgebildet, während in dem Steuerabschnitt 15 eine Niederdruckkammer 32 vorgesehen ist.

In dem Steuerabschnitt 15 sind eine Drosseleinrichtung 57 für die Zugstufendämpfung und eine Drosseleinrichtung 58 für die Druckstufendämpfung vorgesehen. Hier ist die Drosseleinrichtung 57 als einstellbares Drosselventil 13 zur Einstellung der Zugstufendämpfung und die Drosseleinrichtung 58 als einstellbares Drosselventil 14 zur Einstellung der Druckstufendämpfung vorgesehen. Weiterhin sind ein Sperrventil 24 für die Zugstufe, ein Sperrventil 25 für die Druckstufe und High-Speed-Drosselventile 22, 23 für die Zugstufe und die Druckstufe sowie ein Blowoff-Ventil 48 vorgesehen.

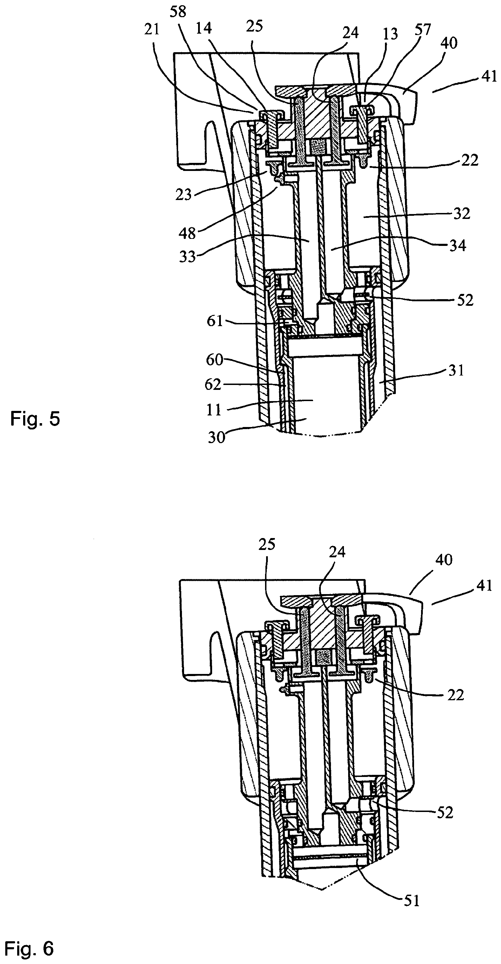

An dem oberen Ende der ersten Kammer 11 der Dämpfungskammer ist ein Rückschlagventil 51 angeordnet, welches durch eine nicht näher dargestellte Feder in die geschlossene Stellung vorbelastet ist, in der das Rückschlagventil 51 die direkte Strömungsverbindung zur Niederdruckkammer 32 verschließt. Das Rückschlagventil 51 öffnet, wenn in der Zugstufe die erste Kammer einen relativen Unterdruck aufweist (vgl. Fig. 6).

Ein Rückschlagventil 52 ist vorgesehen, welches durch eine ebenfalls nicht näher dargestellte Feder in die geschlossene Stellung vorbelastet ist. Das Rückschlagventil 52 wird geöffnet, wenn in der Druckstufe die zweite Kammer 12 einen relativen Unterdruck aufweist (vgl. Fig. 5) und das Dämpfungsfluid aus der Niederdruckkammer 32 über den Rückkanal 35 und die Außenkammer 31 in die zweite Kammer 12 gesaugt wird.

In der Zugstufe wird das aus dem Rückkanal 35 der Steigleitung 34 zugeführte Dämpfungsmedium durch das Drosselventil 13 in die Niederdruckkammer 32 eingeleitet. Im Druckstufenfall wird das aus der ersten Kammer 11 in den Steigkanal 33 eingeleitete Dämpfungsmedium über das Drosselventil 14 in die Niederdruckkammer 32 eingeleitet. Dabei tritt das Dämpfungsfluid in der Druckstufe von der ersten Kammer 11, die Teil der Innenkammer 30 ist, über die Steigleitung 33 in den Steuerabschnitt 15 ein. Je nach Stellung des Drosselventils 14 zur Einstellung der Druckstufendämpfung und nach auftretender Belastung wird das Dämpfungsfluid durch das Drosselventil 14 und/oder durch das High-Speed-Drosselventil 23 in die Niederdruckkammer 32 eingeleitet.

Im Zugstufenfall tritt das Dämpfungsfluid aus der zweiten Kammer 12 im unteren Bereich des Dämpfungssystems 8 in die als Hochdruckkammer ausgeführte Außenkammer 31 ein, die im unteren Bereich 36 der zweiten Kammer 12 durch die Außenwandung des Standrohres 2 und durch ein Zwischenrohr 37 begrenzt wird, welches das Standrohr 2 im unteren Bereich 36 der zweiten Kammer 12 radial umgibt. Dadurch wird eine thermische Isolierung zu dem Tauchrohr 4 bewirkt, welches im unteren Bereich 36 der zweiten Kammer 12 das Standrohr 2 umgibt, sodass eine Erwärmung des Tauchrohres 4 im unteren Bereich weitgehend vermieden wird.

Je nach auftretenden Belastungen gleitet der bewegliche Kolben 9 innerhalb der Dämpfungskammer 10 nach oben und unten, wobei eine Abdichtung radial nach außen zu der Innenkammer 30 über eine Dichtung 49 erfolgt.

Die Drosselventile 13 und 14 sind hier im Ausführungsbeispiel über Einstellelemente 21 verstellbar angeordnet. Die Einstellelemente 21 können hier als Schraubköpfe 28 ausgebildet sein, wobei durch Drehung des Einstellelementes 21 das Drosselventil 13 bzw. 14 weiter in die obere Abschlusswandung des Steuerabschnitts 15 eingeführt wird. Dadurch werden Schlitze oder radiale Bohrungen 54 bzw. 55 entsprechend weiter geöffnet oder weiter geschlossen, über die das Dämpfungsöl in der Druckstufe bzw. Zugstufe geleitet wird. Damit ist über eine Drehbewegung der Einstellelemente 21 der Drosselventile 13 bzw. 14 eine effektive Einstellung der Dämpfungswirkung der Zugstufe und der Druckstufe jeweils getrennt voneinander möglich. Diese Einstellung der Dämpfungswirkung erfolgt insbesondere für den normalen Betrieb, in dem die Federgabel auf die Dämpfung von kleineren bis mittleren oder auch größeren Stößen eingestellt ist.

Um eine Dämpfung auch bei besonders starken Stößen zu gewährleisten, sind die High-Speed-Drosselventile 22 und 23 für die Zugstufe bzw. die Druckstufe vorgesehen. Die High-Speed-Drosselventile 22 und 23 sind im Normalfall nicht einstellbar vorgesehen, obwohl auch das möglich ist.

Hier im Ausführungsbeispiel sind Vorbelastungseinrichtungen vorgesehen, die beispielsweise als Spiralfedern ausgebildet sind, um die jeweiligen High-Speed-Drosselventile 22 und 23 in die geschlossene Stellung vorzubelasten. Wenn nun besonders starke Stöße auftreten, steigt der Druck in der Dämpfungskammer entsprechend an, sodass die Kraft der jeweiligen Vorbelastungseinrichtung überwunden wird und das jeweilige High-Speed-Drosselventil 22 bzw. 23 öffnet. Das führt dazu, dass bei entsprechend starken Belastungen die Ventile öffnen.

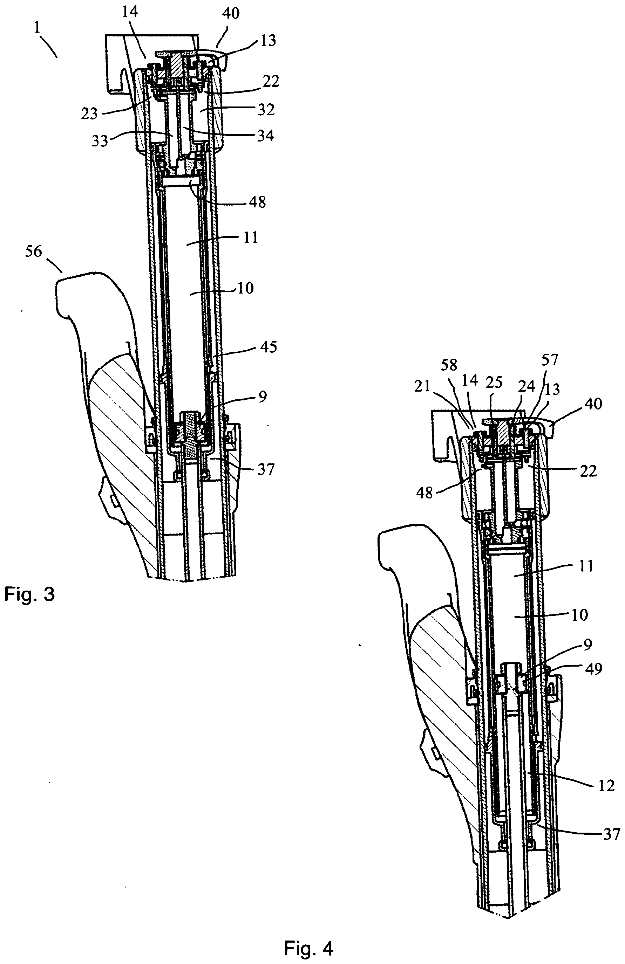

In Fig. 3 ist das Einfedern in der Druckstufe dargestellt, wobei Fig. 5 die Stellung der einzelnen Ventile in vergrößerter Darstellung zeigt. In Fig. 4 ist hingegen das Ausfedern in der Zugstufe dargestellt, wobei Fig. 6 die Stellung der Ventile vergrößert darstellt.

Deutlich erkennbar ist in den Fig. 3 bis 6, dass die Sperrventile 24 und 25 jeweils geöffnet sind, während die Drosselventile 13 und 14 je nach Betriebszustand geöffnet oder geschlossen dargestellt sind.

Wie insbesondere der Darstellung gemäß Fig. 3 entnommen werden kann, befindet sich im Abstand 46 vom unteren Ende der Dämpfungskammer 10 eine Überstromöffnung 45, welche ein Austreten des Dämpfungsfluids aus der zweiten Kammer 12 auch dann erlaubt, wenn das Sperrventil 24 für die Zugstufe geschlossen ist, bis der Kolben 9 die Überströmöffnung 45 hier von oben kommend verschließt.

Die Sperrventile 24 und 25 für die Zugstufe und die Druckstufe dienen dazu eine Dämpfung in der Zugstufe bzw. in der Druckstufe wahlweise zu unterbinden. Eine Dämpfung kann durch Aktivierung eines der Ventile unterbunden werden, wodurch der Durchflusskanal für die Zugstufe oder die Druckstufe entsprechend verschlossen wird.

Ein erheblicher Vorteil der dargestellten Ausführungsform ist, dass ein gemeinsamer Einstellhebel 40 als Einstellelement 21 vorgesehen ist, mit dem das Sperrventil 24 der Zugstufe und auch das Sperrventil 25 der Druckstufe gezielt und wahlweise gemeinsam aktivierbar sind.

Dazu ist der Einstellhebel 40 verschwenkbar an dem oberen Ende 16 des Steuerabschnitts 15 angeordnet, sodass der Einstellhebel 40 hier über das obere Ende des Standrohres 2 hinaussteht und von dem Fahrer als Bedienperson während der Fahrt bedienbar ist. Dazu muss der Fahrer nur mit einer Hand zu der Gabelkrone 17 der Gabel 1 hinuntergreifen und kann durch eine Drehbewegung des Einstellhebels 40 zwischen hier drei oder sogar bis zu vier vorgesehenen Umschaltstufen umschalten. In einer bevorzugten Ausgestaltung kann der Einstellhebel 40 als ferngesteuertes Einstellelement ausgebildet sein, welches z. B. über einen Steuermechanismus am Lenker betätigt wird.

In einer ersten Einstellung 41 des Einstellhebels 40 wird die in Fig. 5 dargestellte Situation erzielt, in der sowohl das Sperrventil 24 der Zugstufe als auch das Sperrventil 25 der Druckstufe nicht aktiviert sind, sodass ein freier Durchfluss durch die Ventile 24 und 25 möglich ist. Dies ist der normale Betriebszustand der Federgabel 1, in der sowohl eine Zugstufendämpfung als auch eine Druckstufendämpfung und eine Einfederung und eine Ausfederung möglich ist.

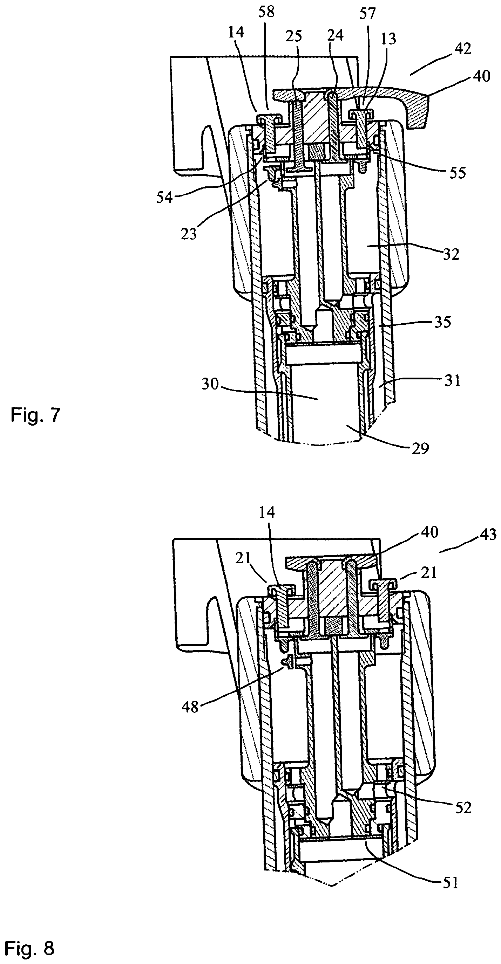

Durch eine Drehbewegung des Einstellhebels 40 von der Position 41 in die zweite Drehposition 42, die in Fig. 7 dargestellt ist, wird das Sperrventil 24 der Zugstufe aktiviert und somit verschlossen, sodass in der Zugstufe im Wesentlichen kein Durchfluss mehr möglich ist. In der Druckstufe ist das Sperrventil 25 immer noch geöffnet. Das bedeutet, dass ein Einfedern noch möglich ist, während ein anschließendes Ausfedern unterbunden wird. Eine solche Drehposition 42 des Einstellhebels 40 ist beispielsweise sinnvoll, wenn der Fahrer eine starke Steigung hochfährt und den Neigungswinkel des Fahrrads verringern möchte. Durch das Einfedern der Vorderradgabel verringert sich dessen effektive Höhe, sodass eine sichere und angenehmere Fahrposition erreicht wird. Nach Aktivieren der Schwenkposition 42 durch das Drehen des Einstellhebels 40 bewirkt jeder Schlag und jede Einfederung ein Absenken der Vorderradgabel 1, bis eine vorgesehene Einstellung erreicht wird.

Durch Weiterdrehen des Einstellhebels 40 in die in Fig. 8 dargestellte dritte Umschaltposition 43 wird erreicht, dass nicht nur das Sperrventil 24 für die Zugstufe, sondern auch das Sperrventil 25 für die Druckstufe geschlossen wird. Eine solche Einstellung des Einstellhebels 40 ist zu jedem Zeitpunkt möglich. Dadurch wird direkt ein Ausfedern und auch ein Einfedern der Gabel verhindert. Die Federgabel 1 verhält sich praktisch so, als wenn kein Feder- und Dämpfungssystem vorhanden wäre. Nur bei besonders großen Stößen kann das Blowoff-Ventil 48 aktiviert werden und einen Durchfluss erlauben, um den maximalen im System auftretenden Druck zu begrenzen und einen Defekt oder ein Zerbersten des Dämpfungssystems 10 der Federgabel zu verhindern, wenn beispielsweise mit dem Fahrrad ein Sprung durchgeführt wird, während sich der Einstellhebel in der dritten Umschaltstufe 43 befindet.

Weiter kann es möglich sein, den Einstellhebel 40 in eine vierte Umschaltstufe 44 zu überführen, in der das Sperrventil für die Druckstufe geschlossen ist, während das Sperrventil 24 für die Zugstufe geöffnet ist. Dadurch wird ein Ausfedern der Feder ermöglicht, während ein Einfedern verhindert wird.

Die Federgabel 1 weist weiterhin das schon erwähnte Überströmventil 45 auf, welches in einem Abstand 46 vom unteren Ende der zweiten Kammer 12 vorgesehen ist. Durch die Überströmöffnung 45 wird bei aktiviertem Sperrventil 24 der Zugstufe ein vollständiges Einfedern der Federgabel 1 verhindert.

Es ist ein Verbindungskanal 60 vorgesehen, der über wenigstens eine Strömungsdrossel 63 verfügt. Der Verbindungskanal 60 dient dazu, die Federgabel bei aktiviertem Sperrventil 24 der Zugstufe nach starken Einfedervorgängen langsam automatisch wieder bis auf ein bestimmtes Maß ausfedern zu lassen.

Dazu stellt der Verbindungskanal 60 eine Strömungsverbindung für das Dämpfungsfluid zwischen der zweiten Kammer 12 und der ersten Kammer 11 zur Verfügung, wenn das Standrohr 2 und das damit zusammenwirkende Tauchrohr 4 um mehr als einen vorgegebenen Abstand 46 eingefedert sind. Dadurch wird bei stärkerem Einfedern und aktiviertem Sperrventil 24 der Zugstufe ein langsames Ausfedern bis zu einer durch den vorgegebenen Abstand 46 definierten Dämpferstellung 68 ermöglicht.

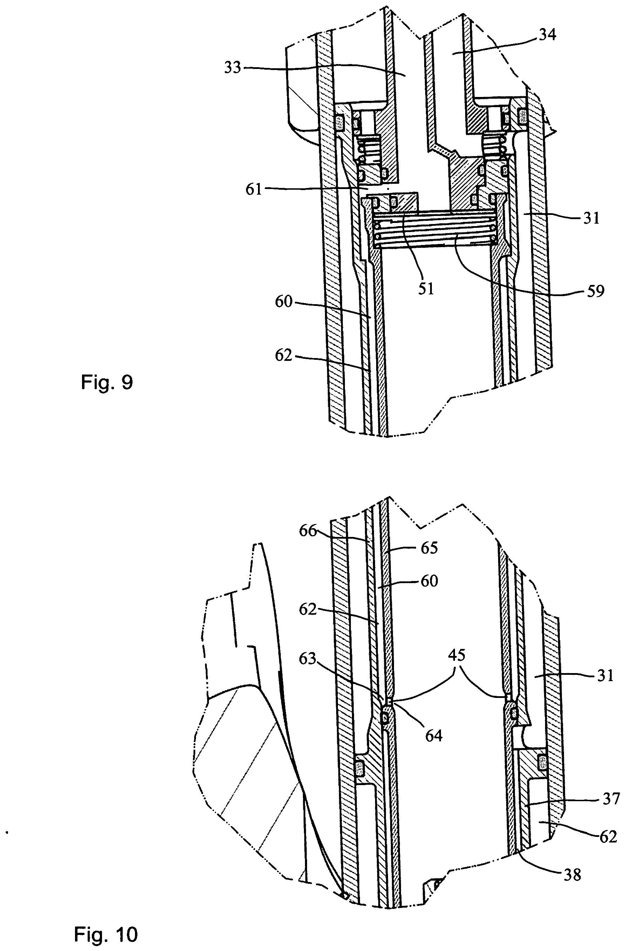

Die Ausgestaltung des Überströmventils oder der Überströmöffnung 45 ist vergrößert in den Figuren 9 und 10 dargestellt. Zwischen etwa 20 und 50 % des Einfederwegs ist wenigstens eine Überströmöffnung 45 an der Dämpfungskammer 10 vorgesehen. Die Überströmöffnung 45 weist den Abstand 46 von unten auf, während der maximale Hub der Länge 47 entspricht. Die wenigstens eine Überströmöffnung 45 ist hier über den als Ringkanal 62 ausgebildeten Kanal mit der Öffnung 61 verbunden, die hier in die Steigleitung 33 mündet. Dadurch kann Dämpfungsfluid aus der Kammer 12 direkt in die Steigleitung 33 und somit wieder in die Kammer 11 eintreten. Das Dämpfungsfluid kann aus der Kammer 12 über die Überströmöffnung 45 in den Kanal 60 und weiter über die Öffnung 61 in die Steigleitung 33 und von da in die erste Kammer 11 übertreten, sodass die Federgabel wieder ausfedert, bis der Kolben die Überströmöffnung 45 wieder verschließt.

Die Strömungsdrossel 63 wird hier insbesondere durch die Überströmöffnung 45 oder durch die Überströmöffnungen 45 gebildet, wenn mehrere vorhanden sind. Der Strömungsquerschnitt 64 der Strömungsdrossel 63 wird durch die freie Durchgangsfläche der Überströmöffnung 45 (oder durch die Summe der einzelnen Flächen der Überströmöffnungen 45) gebildet. Hier ist der Strömungsquerschnitt 64 jedenfalls erheblich kleiner als der halbe maximale Strömungsquerschnitt der Drosseleinrichtung 58 bzw. des Drosselventils 14 für die Druckstufe.

Das Verhältnis des Strömungsquerschnitts 64 der Strömungsdrossel 63 zu dem maximalen Strömungsquerschnitt der Drosseleinrichtung 58 für die Druckstufe ist insbesondere kleiner als 1:3 und vorzugsweise kleiner als 1:5 und besonders bevorzugt kleiner als 1:8. Werte von 1:10 oder 1:20 und insbesondere auch 1:30 sind möglich und bevorzugt. Die Fläche ist insbesondere so bemessen, dass der Verbindungskanal 60 in geöffnetem Zustand das Dämpfungsverhalten der Federgabel nur gering beeinflusst.

Das Gleiche gilt vorzugsweise auch für das Verhältnis des Strömungsquerschnitts 64 der Strömungsdrossel 63 zu dem maximalen Strömungsquerschnitt der Drosseleinrichtung 50 für die Zugstufe.

Der Ringspalt 62 wird durch ein Innenrohr 65 und ein Mittelrohr 66 begrenzt, welche beide konzentrisch innerhalb des Standrohres angeordnet sind.

In anderen Ausgestaltungen kann der Verbindungskanal über z. B. ein steuerbares Ventil absperrbar sein.

In anderen Ausgestaltungen kann der Kanal 60 über eine Öffnung 61 auch direkt in die Niederdruckkammer 32 münden (Variante nicht abgebildet). So kann eine Federgabel auf unterschiedliche Betriebsweisen eingestellt werden. Die Federgabel kann komplett starr eingestellt werden. Die Federgabel kann z. B. für Bergfahrten auch um einen bestimmten Anteil eingefedert werden.

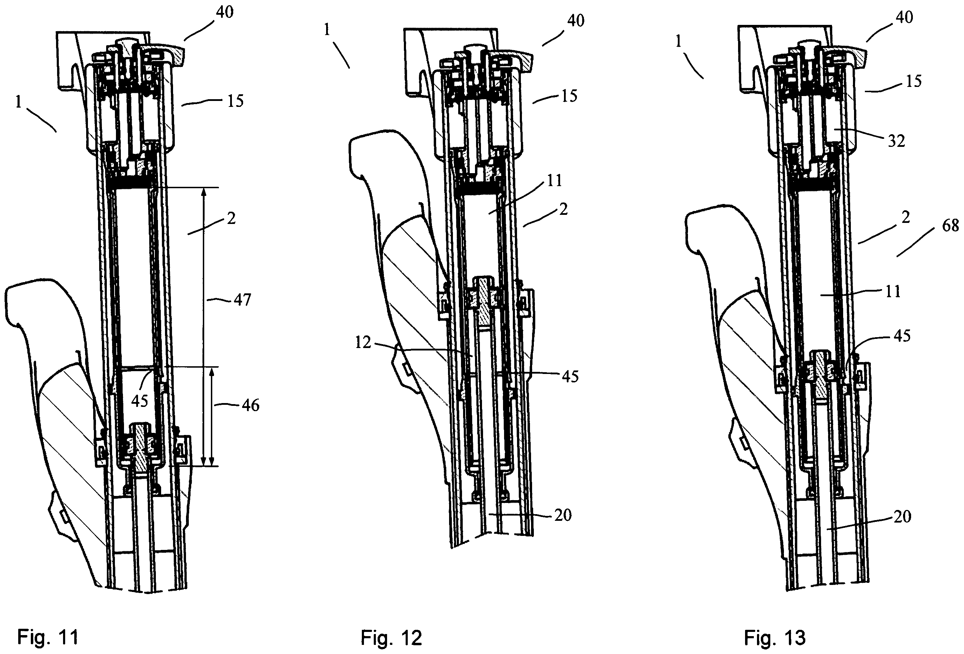

Die Funktions- und Wirkungsweise des Überströmventils 45 wird nun mit Bezug auf die Fig. 11 bis 13 erläutert.

Dabei befindet sich in der Darstellung gemäß Fig. 11 die Federgabel 1 im ausgefederten Zustand, wobei das Sperrventil 24 der Zugstufe aktiviert ist, um ein Einfedern der Federgabel 1 zu ermöglichen, während ein Ausfedern im Wesentlichen verhindert wird.

Nach Aktivierung des Sperrventils 24 durch Überführen des Einstellhebels 40 in die zweite Umschaltstufe 42 wird die Steigleitung 34 für die Zugstufe verschlossen. Die während der Fahrt auftretenden Stöße bewirken ein Absenken der Federgabel 1, bis die Federgabel beispielsweise die in Fig. 13 dargestellte Stellung erreicht hat, in der der Kolben 9 bis zu der Überströmöffnung 45 eingefedert ist.

Wenn nun in dieser Stellung ein weiterer starker Stoß auf die Federgabel 1 einwirkt, wird die Federgabel weiter über die Überströmöffnung 45 hinaus einfedern (vgl. Fig. 12). Dadurch wird die Überströmöffnung 45 frei gegeben, sodass die sperrende Wirkung des Sperrventils 24 umgangen wird. Der Verbindungskanal 60 verbindet die zweite Kammer 12 mit der ersten Kammer 11 und die Federgabel wird automatisch langsam abgesenkt. Der Austausch des Dämpfungsfluids erfolgt langsam, da der Strömungsquerschnitt 64 der als Strömungsdrossel 63 dienenden Überströmöffnung 45 klein ist.

Durch die Überströmöffnung 45 bedingt kann die Federgabel 1 wieder ausfedern, bis sich der in Fig. 13 dargestellte Zustand ergibt, in der die Überströmöffnung 45 wieder verschlossen wird.

Insgesamt wird durch die Überströmöffnung 45 trotz aktiviertem Sperrventil 24 ein System zur Verfügung gestellt, welches den Federweg auch bei aktiviertem Sperrventil 24 der Zugstufe begrenzt. Durch die Anordnung der Überströmöffnung 45 kann der gewünschte Federweg eingestellt werden.

Damit wird eine Funktion zur Verfügung gestellt, die bei Bergauffahrten das nötige Einfedern zur Verfügung stellt, während andererseits weiterhin eine geringe Dämpfungsfunktion zur Verfügung stellt.

Wenn mehrere einstellbare oder schaltbare Überströmöffnungen 45 in unterschiedlichen Höhen vorgesehen werden, kann der bei aktiviertem Sperrventil 24 noch zur Verfügung stehende Federweg entsprechend eingestellt werden.

Die Figuren 14 bis 16 zeigen Querschnitte durch eine weitere Ausführungsform einer erfindungsgemäßen Federgabel 1. Gleiche oder ähnliche Bauteile werden mit den gleichen Bezugszeichen versehen. Das Dämpfungssystem 8 ist wiederum in ein Standrohr 2 oder 3 einer Federgabel 1 eingesetzt, so wie es in Fig. 1 gezeigt ist.

Im Unterschied zum vorangegangenen Ausführungsbeispiel ist in dem Ausführungsbeispiel nach den Figuren 14 bis 16 das Drosselventil 13 als Lowspeed-Drosselventil für die Zugstufe am oberen Ende der Dämpfungskammer 10 vorgesehen. Auch das Drosselventil 14 als Lowspeed-Drosselventil für die Druckstufe ist am oberen Ende der Dämpfungskammer 10 angeordnet. Die Ventile trennen den Hochdruckbereich von dem Niederdruckbereich. Der Steuerabschnitt 15 erstreckt sich praktisch von dem oberen Ende der ersten Kammer 11 bis zum oberen Ende 16 des Standrohrs 2.

Die Drosselventile 13 (Lowspeed) für die Zugstufe und 14 (Lowspeed) für die Druckstufe sind über entsprechende Steuerelemente bzw. Steuerstifte mit dem oberen Ende 16 verbunden und können durch Betätigung des Einstellteils 40 eingestellt werden.

In Fig. 14 ist erkennbar, dass der Steuerstift 73 auf das Sperrventil 24 für die Zugstufe einwirkt, sodass bei Bedarf der Lockout aktiviert werden und die Zugstufendämpfung blockiert werden kann. Ein Steuerstift 75 wirkt auf das Sperrventil 25 für die Druckstufe ein und kann wahlweise die Druckstufendämpfung blockieren. Bei besonders starken Stößen öffnet das Blowoff-Ventil 48, wenn die Stöße eine Kraft erzeugen, die die Spannkraft der Feder 74 des Blowoff-Ventils 48 übersteigt.

Das das Blowoff-Ventil 48 ist über Dichtungen 77 jeweils gegenüber dem Steuerstift 76 und der äußeren Wandung abgedichtet ist.

Das High-Speed-Drosselventil 23 ist hier parallel zu dem Low-Speed-Drosselventil 14 geschaltet.

Oberhalb der Sperrventil 24 und 25 wird der Ölausgleichsraum 72 über eine Trennwandung von einem Gasvolumen 79 getrennt. Die Trennwandung ist hier als Gummischlauch 70 ausgeführt und stellt eine zuverlässige Trennung des Öls von dem Gasvolumen sicher. Das Gasvolumen 79 steht unter einem Überdruck, der typischerweise zwischen 1 und 5 bar beträgt. Der bewegliche Kolben 9 ist hier als undurchlässiger Pumpkolben ausgeführt. Wenn der bewegliche Kolben 9 eintaucht, wird das dem Öl zur Verfügung stehende Volumen reduziert. Dadurch wird das Gasvolumen 79 durch den flexiblen Gummischlauch 70 entsprechend komprimiert und der Ausgleichsraum 72 entsprechend vergrößert.

Der O-Ring 71 deckt eine Bohrung ab. Der O-Ring 71 dient zusammen mit der Bohrung als Einwegventil und dient zum Befüllen mit Gas nach der Montage der Federgabel. Das Einwegventil öffnet, wenn der Innendruck den O-Ring soweit aufdehnt, bis Gas durch den entstehenden Spalt austreten kann.

In Fig. 15 ist ein weiterer Querschnitt durch den Steuerabschnitt 15 gezeigt, wobei Fig. 15 einen etwa quer zu dem Querschnitt nach Fig. 14 angeordneten Querschnitt zeigt.

Erkennbar ist das Drosselventil 13 als Low-Speed-Regelventil für die Zugstufe. Über eine Längsverstellung wird der Regelspalt 69 reguliert und somit der Durchflusswiderstand eingestellt.

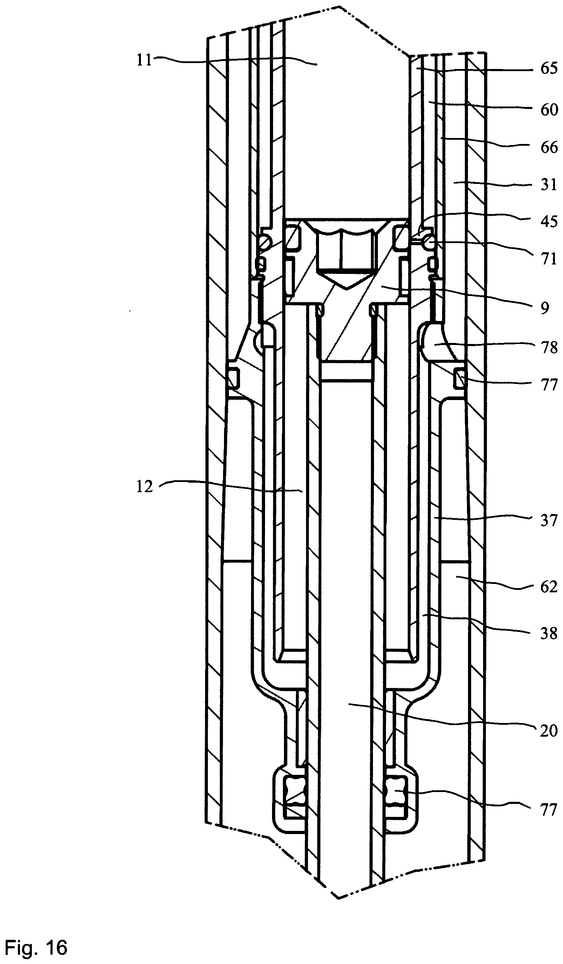

Fig. 16 zeigt einen Querschnitt durch den Bereich des Kolbens im untere Bereich der Dämpfungskammer, dort wo wie im vorausgegangenen Ausführungsbeispiel die Überströmöffnung 45 vorgesehen ist.

Die Kolbenstange 20 ist über eine Dichtung 77 gegenüber der Dämpferkammer 10 abgedichtet. Am oberen Ende der Kolbenstange 20 ist der bewegliche Kolben 9, der als Pumpkolben ausgeführt ist, und der die erste Kammer 11 von der zweiten Kammer 12 trennt.

Die zweite Kammer 12 geht unten in den damit verbundenen Zwischenraum 38 über. Nach außen wird die zweite Kammer 12 bzw. der Niederdruckbereich dort durch das Zwischenrohr 37 begrenzt, welches mit einer Dichtung 77 nach außen zu dem Standrohr abgedichtet ist. Der Zwischenraum 38 ist am oberen Ende radial nach außen über mindestens eine Öffnung 78 mit der Außenkammer 31 verbunden. Die zweite Kammer 12 bildet mit dem Zwischenraum 38 und der Außenkammer zusammen die Zugstufenkammer.

Radial innerhalb der Außenkammer 31 ist das Mittelrohr 66 vorgesehen, in welchem hier konzentrisch das Innenrohr 65 angeordnet ist. Zwischen dem Innenrohr 65 und dem Mittelrohr 66 ist ein Kanal 60 vorgesehen. Von dem Kanal 60 mündet eine Öffnung 61 im oberen Bereich in die erste Kammer 11 und eine Öffnung 45 im unteren Bereich in die Dämpfungskammer 10. Dadurch kann der Kanal 60 einen Bypass zwischen der ersten Kammer 11 und der zweiten Kammer 12 darstellen, wenn sich der bewegliche Kolben 9 zwischen der den Öffnungen 45 und 61 befindet. Dadurch kann auch bei blockierter Dämpfung ein Austausch stattfinden. Der Austausch ist langsam, da die Strömungsquerschnitte der Öffnungen bewusst klein gewählt wurden.

Um die Durchflussmengen durch die Überströmöffnungen 45 und 61 noch weiter zu reduzieren, können über den Überströmöffnungen 45 und 61 O-Ringe 71 vorgesehen sein. Dadurch wird erreicht, dass erst ein bestimmter Druck überwunden werden muss, was den Durchfluss weiter bremst und somit die normale Funktion möglichst wenig einschränkt. Es hat sich nämlich gezeigt, dass die Überströmöffnungen 45 und 61 sehr klein sein sollten. Und auch bei kleinen Öffnungen ist es sinnvoll, den Durchfluss noch weiter zu reduzieren.

Ein erheblicher Vorteil der Überstromöffnungen 45 und 61 und es dadurch bereitgestellten Bypasses ist auch, dass unabhängig von dem Gewicht des Fahrers auch bei gesperrter Zugstufe immer die gleiche Position eingestellt wird. Diese Position ist unabhängig von der einwirkenden Kraft, sondern wird durch die Position der Bohrung definiert. Das ist sehr vorteilhaft, da dadurch für alle Fahrer die gleiche Position eingestellt wird, was insbesondere bei steilen Bergauffahrten sehr günstig ist.

Es folgt eine kurze Beschreibung der Funktion: In der Druckstufe, d.h. beim Einfedern und bei geöffneten Sperrventilen 24 und 25.

Als Folge eines Stoßes fährt der als Pumpkolben ausgeführte bewegliche Kolben 9 nach oben und der Druck in der ersten Kammer 11 oberhalb des Kolbens 9 steigt an. Das Öl wird dann über das Drosselventil 14 (Druckstufenventil Low-speed) nach oben fließen.

Das Drosselventil 23 ist durch eine Feder vorbelastet, sodass bei geringen Belastungen ein Shim das Drosselventil 23 abdichtet. Ab einer bestimmten Belastung bzw. einem entsprechenden Überdruck öffnet zusätzlich das High-Speed-Drosselventil 23 der Druckstufe, so dass die Drosselventile 14 und 23 parallel geöffnet sind. Das Öl fließt nach oben in den Ölausgleichsraum 72 am oberen Ende des Standrohres. Der als Ringkammer ausgebildete Ölausgleichsraum 72 ist zwischen der Standrohrwandung und dem flexiblen Gummischlauch 70 gebildet. Der Gummischlauch 70 wird durch das in den Ölausgleichsraum 72 einfließende Öl komprimiert. Im Inneren des Gummischlauches 70 ist ein Gasvolumen 79 vorhanden. Das Gasvolumen 79 ist hier mit Luft gefüllt und im vorliegendem Fall unter einen Druck von z.B. 3-4 Bar gesetzt. Dadurch wird zuverlässig Kavitation in dem strömenden Öl vermieden. Durch den Gummischlauch und das Gasvolumen wird das Volumen der Kolbenstange ausgeglichen. Und auch bei Wärmeausdehnung des Öls steht ein entsprechendes Reservoir zur Verfügung.

Beim Einfedern sinkt gleichzeitig in der zweiten Kammer 12 unterhalb des beweglichen Kolbens 9 der Druck. Die zweite Kammer steht unten in Strömungsverbindung mit dem Zwischenraum 38 und der Außenkammer 31, von wo nun Öl angesaugt wird. Die Außenkammer 31 grenzt an den Steuerabschnitt 15. Dort öffnet ein Rücklaufventil und Öl fließt von oben aus dem Ölausgleichsraum 72 ab.

Beim Ausfedern in der Zugstufe fährt der bewegliche Kolben 9 nach unten und es bildet sich in der unteren zweiten Kammer 12 und somit auch in der Außenkammer 31 ein Überdruck, während in der ersten Kammer 11 oberhalb des Kolbens 9 ein Unterdruck entsteht. Durch der Unterdruck in der ersten Kammer 11 öffnet wenigstens ein am oberen Ende angeordnetes Rückschlagventil und es wird Öl von oben aus dem Ölausgleichraum 72 angesaugt.

Insgesamt stellt die erfindungsgemäße Federgabel 1 ein System bereit, welches eine hohe Wärmeableitung im oberen Bereich der Standrohre 2, 3 ermöglicht, wobei alle Bedienelemente 21, 40 flexibel in einem oberen Bereich 16 der Standrohre 2 und 3 angeordnet werden können.

In allen Ausgestaltungen kann wenigstens ein Sperrventil 24 oder 25 und/oder wenigstens ein Drosselventil 13 oder 14 elektrisch oder magnetisch betätigbar oder aktivierbar sein. Insbesondere ist auch eine fernsteuerbare Ausführung möglich und bevorzugt. Möglich ist z. B.eine Betätigung vom Lenker aus. Bevorzugt ist auch eine mechanische Fernsteuerung.

Weiterhin befinden sich auch die Drosselventile 13, 14, 22 - 25 im oberen Bereich 16 der Standrohre 2 oder 3 und es kann über einen gemeinsamen an der Gabelkrone 27 oder an dem Standrohr 2, 3 vorgesehenen Einstellhebel 40 sowohl ein Zugstufen-Lockout (gesperrtes Zugstufen-Sperrventil) als auch ein Druckstufen-Lockout (gesperrtes Druckstufen-Sperrventil) eingestellt werden, sodass die Gabel 1 sowohl in Einfederrichtung als auch in Ausfederrichtung starr wird. Gleichzeitig kann auch bei aktiviertem Zugstufen-Lockout über ein Überströmventil 45 eine Dämpfungsfunktion gewährleistet werden.

**Bezugszeichenliste:**

| | | | |
|---|---|---|---|
| 1 | Federgabel | 41 | erste Drehposition |
| 2 | Standrohr | 42 | zweite Drehposition |
| 3 | Standrohr | 43 | dritte Drehposition |
| 4 | Tauchrohr | 44 | vierte Drehposition |
| 5 | Tauchrohr | 45 | Überströmöffnung |
| 6 | Radaufnahmeraum | 46 | Abstand |
| 7 | Verbindungsteil | 47 | Länge |
| 8 | Dämpfungssystem | 48 | Blowoff-Ventil |
| 9 | beweglicher Kolben | 49 | Dichtung |
| 10 | Dämp fungskammer | 50 | Federsystem |
| 11 | erste Kammer | 51 | Rückschlagventil |
| 12 | zweite Kammer | 52 | Rückschlagventil |
| 13 | Drosselventil | 53 | Kolbenführung |
| 14 | Drosselventil | 54 | radiale Bohrung |
| 15 | Steuerabschnitt | 55 | radiale Bohrung |
| 16 | oberes Ende | 56 | Verbindungsbügel |
| 17 | unteres Ende | 57 | Drosseleinrichtung |
| 18 | Ausfallende | 58 | Drosseleinrichtung |
| 19 | Ausfallende | 59 | Feder |
| 20 | Kolbenstange | 60 | Kanal |
| 21 | Einstellelement | 61 | Öffnung |
| 22 | High-Speed-Drosselventil | 62 | Ringspalt |
| 23 | High-Speed-Drosselventil | 63 | Strömungsdrossel |
| 24 | Sperrventil | 64 | Strömungsquerschnitt |
| 25 | Sperrventil | 65 | Innenrohr |
| 26 | Gabelschaft | 66 | Mittelrohr |
| 27 | Gabelkrone | 68 | Dämpferstellung |
| 29 | Hochdruckkammer | 69 | Regelspalt |
| 30 | Innenkammer | 70 | Gummischlauch |
| 31 | Außenkammer | 71 | O-Ring |
| 32 | Niederdruckkammer | 72 | Ölausgleichsraum |
| 33 | Steigleitung | 73 | Steuerstift |
| 34 | Steigleitung | 74 | Feder |
| 35 | Rückkanal | 75 | Steuerstift |
| 36 | unterer Bereich | 76 | Steuerstift |
| 37 | Zwischenrohr | 77 | Dichtung |
| 38 | Zwischenraum | 78 | Öffnung |
| 39 | Wandung | 79 | Gasvolumen |
| 40 | Einstellteil | | |

## Patentansprüche

1. Federgabel (1) für ein Fahrrad, umfassend zwei Standrohre (2, 3) und zwei damit zusammenwirkende Tauchrohre (4, 5) und einen Radaufnahmeraum (6) dazwischen, sowie ein Dämpfungssystem (8),
**dadurch gekennzeichnet,**
**dass** das Dämpfungssystem (8) wenigstens ein Sperrventil zur Sperrung der Zugstufe (13) und wenigstens ein Sperrventil (14) zur Sperrung der Druckstufe sowie ein gemeinsames Einstellteil (40) aufweist, wobei mit dem gemeinsamen Einstellteil (40) die Sperrung der Zugstufe und die Sperrung der Druckstufe einstellbar ist.

2. Federgabel (1) nach Anspruch 1, wobei das Dämpfungssystem (8) wenigstens eine durch einen beweglichen Kolben (9) in eine erste Kammer (11) und in eine zweite Kammer (12) geteilte Dämpfungskammer (10) und einen Steuerabschnitt (15) an einem Standrohr (2, 3) aufweist, wobei der Steuerabschnitt (15) oberhalb des beweglichen Kolbens (9) angeordnet ist.

3. Federgabel (1) nach mindestens einem der vorhergehenden Ansprüche, wobei das Einstellteil (40) an einem Standrohr (2, 3) oder an dem Verbindungsteil (7, 27) angeordnet und dort insbesondere verschwenkbar befestigt ist.

4. Federgabel (1) nach mindestens einem der vorhergehenden Ansprüche, wobei das Einstellteil (40) in einer Position (42) das Sperrventil für die Zugstufe aktiviert und/oder in einer anderen Position (43) das Sperrventil für die Druckstufe und das Sperrventil für die Zugstufe aktiviert und/oder in einer weiteren Position nur das Sperrventil für die Druckstufe aktiviert.

5. Federgabel (1) nach mindestens einem der beiden vorhergehenden Ansprüche, wobei das Einstellteil (40) drehbeweglich vorgesehen ist, und wobei das Einstellteil (40) in einer zweiten Drehposition das Sperrventil für die Zugstufe aktiviert und in einer dritten Drehposition das Sperrventil für die Zugstufe und das Sperrventil für die Druckstufe und gegebenenfalls in einer vierten Drehposition nur das Sperrventil für die Druckstufe aktiviert.

6. Federgabel (1) nach mindestens einem der vorhergehenden Ansprüche, wobei der bewegliche Kolben (9) über eine Kolbenstange (20) mit einem Tauchrohr (4) verbunden ist.

7. Federgabel (1) nach mindestens einem der vorhergehenden Ansprüche, wobei an dem Steuerabschnitt (15) wenigstens eine Drosseleinrichtung (57) für die Zugstufendämpfung und wenigstens eine Drosseleinrichtung (57) für die Druckstufendämpfung vorgesehen ist.

8. Federgabel (1) nach dem vorhergehenden Anspruch, wobei die Drosseleinrichtung (57) für die Zugstufendämpfung als einstellbares Drosselventil (13) ausgebildet ist.

9. Federgabel (1) nach mindestens einem der beiden vorhergehenden Ansprüche, wobei die Drosseleinrichtung (58) für die Druckstufendämpfung als einstellbares Drosselventil (14) ausgebildet ist.

10. Federgabel (1) nach mindestens einem der vorhergehenden Ansprüche, wobei wenigstens eines der einstellbaren Drosselventile (13, 14) ein Low-Speed-Drosselventil ist.

11. Federgabel (1) nach mindestens einem der vorhergehenden Ansprüche, wobei für die Zugstufendämpfung und/oder für die Druckstufendämpfung ein fest eingestelltes High-Speed-Drosselventil (22, 23) vorgesehen ist.

12. Federgabel (1) nach mindestens einem der vorhergehenden Ansprüche, wobei die Dämpfungskammer (10) eine Innenkammer (30) bildet, die von einer Außenkammer (31) wenigstens teilweise umgeben ist.

13. Federgabel (1) nach mindestens einem der vorhergehenden Ansprüche, wobei die Dämpfungskammer (30) als Hochdruckkammer (29) ausgebildet ist und wobei der Steuerabschnitt (15) eine Niederdruckkammer (32) aufweist.

14. Federgabel (1) nach mindestens einem der vorhergehenden Ansprüche, wobei das Einstellteil (40) an einem Steuerabschnitt (15) oberhalb der Dämpfungskammer (10) vorgesehen ist, um einem Fahrer eines damit ausgerüsteten Fahrrads das Bedienen während der Fahrt zu ermöglichen.

## Claims

1. Suspension fork (1) for a bicycle comprising a pair of stanchion tubes (2, 3) and a pair of slider tubes (4, 5) interacting therewith and a wheel receiving space (6) in-between, and a damping system (8), **characterized in that** the damping system (8) comprises at least one shut-off valve for locking the rebound stage (13) and at least one shut-off valve (14) for locking the compression stage and a joint adjusting element (40) wherein the locking of the rebound stage and the locking of the compression stage is adjustable by means of the joint adjusting element (40).

2. The suspension fork (1) according to claim 1 wherein the damping system (8) comprises at least one damping chamber (10) divided into a first chamber (11) and a second chamber (12) by means of a movable piston (9) and a control section (15) at a stanchion tube (2, 3) wherein the control section (15) is disposed above the movable piston (9).

3. The suspension fork (1) according to at least one of the preceding claims wherein the adjusting element (40) is disposed at a stanchion tube (2, 3) or at the connector (7, 27) where it is in particular pivotally attached.

4. The suspension fork (1) according to at least one of the preceding claims wherein in one position (42) the adjusting element (40) activates the shut-off valve for the rebound stage and in another position (43) activates the shut-off valve for the compression stage and the shut-off valve for the rebound stage and/or in another position only activates the shut-off valve for the compression stage.

5. The suspension fork (1) according to at least one of the two preceding claims wherein the adjusting element (40) is provided to be rotatable and wherein in a second rotational position the adjusting element (40) activates the shut-off valve for the rebound stage and in a third rotational position activates the shut-off valve for the rebound stage and the shut-off valve for the compression stage and optionally in a fourth rotational position, only activates the shut-off valve for the compression stage.

6. The suspension fork (1) according to at least one of the preceding claims wherein the movable piston (9) is connected with a slider tube (4) via a piston rod (20).

7. The suspension fork (1) according to at least one of the preceding claims wherein the control section (15) is provided with at least one damping device (57) for rebound damping and at least one damping device (57) for compression damping.

8. The suspension fork (1) according to the preceding claim wherein the damping device (57) for rebound damping is configured as an adjustable damper valve (13).

9. The suspension fork (1) according to at least one of the two preceding claims wherein the damping device (58) for compression damping is configured as an adjustable damper valve (14).

10. The suspension fork (1) according to at least one of the preceding claims wherein at least one of the adjustable damper valves (13, 14) is a low-speed damper valve.

11. The suspension fork (1) according to at least one of the preceding claims wherein a fixedly set high-speed damper valve (22, 23) is provided for rebound damping and/or for compression damping.

12. The suspension fork (1) according to at least one of the preceding claims wherein the damping chamber (10) forms an internal chamber (30) which is enclosed by an external chamber (31) at least in part.

13. The suspension fork (1) according to at least one of the preceding claims wherein the damping chamber (30) is configured as a high pressure chamber (29) and wherein the control section (15) comprises a low pressure chamber (32).

14. The suspension fork (1) according to at least one of the preceding claims wherein the adjusting element (40) is provided at a control section (15) above the damping chamber (10) to enable a rider of a thus equipped bicycle operation during a ride.

## Revendications

1. Fourche à ressort (1) pour une bicyclette, comprenant deux tubes fixes (2, 3) et deux tubes plongeurs (4, 5) agissant de concert avec ceux-ci et un espace de logement de roue (6) situé entre ceux-ci ainsi qu'un système d'amortissement (8),
**caractérisée par le fait que** ledit système d'amortissement (8) présente au moins une soupape d'arrêt destinée à bloquer l'étage de traction (13) et au moins une soupape d'arrêt (14) destinée à bloquer l'étage de compression ainsi qu'un organe de réglage (40) commun, dans laquelle le blocage de l'étage de traction et le blocage de l'étage de compression est réglable au moyen dudit organe de réglage (40) commun.

2. Fourche à ressort (1) selon la revendication 1, dans laquelle le système d'amortissement (8) présente au moins une chambre d'amortissement (10) divisée par un piston mobile (9) en une première chambre (11) et en une deuxième chambre (12), ainsi qu'une section de commande (15) sur un tube fixe (2, 3), ladite section de commande (15) étant disposée au-dessus du piston mobile (9).

3. Fourche à ressort (1) selon l'une au moins des revendications précédentes, dans laquelle ledit organe de réglage (40) est disposé sur un tube fixe (2, 3) ou sur la pièce de jonction (7, 27) et y est fixé en particulier à pivotement.

4. Fourche à ressort (1) selon l'une au moins des revendications précédentes, dans laquelle, dans une position (42), ledit organe de réglage (40) active la soupape d'arrêt pour l'étage de traction et/ou, dans une autre position (43), il active la soupape d'arrêt pour l'étage de compression et la soupape d'arrêt pour l'étage de traction et/ou, dans une autre position, il n'active que la soupape d'arrêt pour l'étage de compression.

5. Fourche à ressort (1) selon l'une au moins des deux revendications précédentes, dans laquelle ledit organe de réglage (40) est prévu de manière à être mobile en rotation, et dans laquelle, dans une deuxième position de rotation, ledit organe de réglage (40) active la soupape d'arrêt pour l'étage de traction et, dans une troisième position de rotation, il active la soupape d'arrêt pour l'étage de traction et la soupape d'arrêt pour l'étage de compression et, le cas échéant, dans une quatrième position de rotation, il n'active que la soupape d'arrêt pour l'étage de compression.

6. Fourche à ressort (1) selon l'une au moins des revendications précédentes, dans laquelle ledit piston mobile (9) est relié par une tige de piston (20) à un tube plongeur (4).

7. Fourche à ressort (1) selon l'une au moins des revendications précédentes, dans laquelle au moins un dispositif d'étranglement (57) pour l'amortissement de l'étage de traction et au moins un dispositif d'étranglement (58) pour l'amortissement de l'étage de compression est prévu sur ladite section de commande (15).

8. Fourche à ressort (1) selon la revendication précédente, dans laquelle ledit dispositif d'étranglement (57) pour l'amortissement de l'étage de traction est réalisé en tant que soupape d'étranglement (13) réglable.

9. Fourche à ressort (1) selon l'une au moins des deux revendications précédentes, dans laquelle ledit dispositif d'étranglement (58) pour l'amortissement de l'étage de compression est réalisé en tant que soupape d'étranglement (14) réglable.

10. Fourche à ressort (1) selon l'une au moins des revendications précédentes, dans laquelle l'une au moins des soupapes d'étranglement (13, 14) réglables est une soupape d'étranglement de basse vitesse.

11. Fourche à ressort (1) selon l'une au moins des revendications précédentes, dans laquelle une soupape d'étranglement de haute vitesse (22, 23) réglée de manière fixe est prévue pour l'amortissement de l'étage de traction et/ou pour l'amortissement de l'étage de compression.

12. Fourche à ressort (1) selon l'une au moins des revendications précédentes, dans laquelle la chambre d'amortissement (10) forme une chambre intérieure (30) qui est entourée au moins en partie d'une chambre extérieure (31).

13. Fourche à ressort (1) selon l'une au moins des revendications précédentes, dans laquelle la chambre d'amortissement (30) est réalisée en tant que chambre à haute pression (29) et dans laquelle la section de commande (15) présente une chambre à basse pression (32).

14. Fourche à ressort (1) selon l'une au moins des revendications précédentes, dans laquelle ledit organe de réglage (40) est prévu sur une section de commande (15) au-dessus de la chambre d'amortissement (10) afin de permettre à un conducteur d'une bicyclette en équipée le manoeuvre pendant qu'il roule.
